# EUROPEAN PATENT APPLICATION

(11) **EP 2 928 245 A1**
(43) Date of publication of application: **07.10.2015**
(21) Application number: 14290089.3
(22) Date of filing: 01.04.2014
(51) Int. Cl.: H04W 64/00

(54) **A wireless access point, a transmitter-implemented method, a mobile user device and a user-implemented method for localization**

(71) Applicant: ALCATEL LUCENT, 92100 Boulogne-Billancourt (FR)
(72) Inventor: Vanderhulst, Geert, 2018 Antwerpen (BE)
(74) Representative: Plas, Axel Ivo Michel

(57) **Abstract**

A device (20) with wireless data connectivity comprising:
- a receiving module (21) adapted to receive and decode an information packet (100) transmitted or broadcasted by a wireless access point (10), comprising a transmission power value (102);
- a signal strength measuring module (22) adapted to measure a strength (103) of a signal (104) transmitted by the wireless access point (10); and
- a distance calculating module (23) adapted to calculate the difference (201) between the transmission power value (102) and the strength (103), and to calculate a distance (500) between the device (20) and the wireless access point (10).

## Description

### Field of the Invention

The present invention generally relates to a wireless access point, a mobile user device and the related methods for localization of the mobile user device in a system, for instance a Wi-Fi data transmission system.

### Background of the Invention

The signal strength of a Wi-Fi signal picked up by a user device provides an indication of the distance between the access point emitting the signal and the user device. However, the signals can be heavily reflected and partially absorbed by metals and constructions, such as walls for example, which jeopardizes the accuracy of the localization of the user device. A conventional technique to address this problem is static fingerprinting, for instance static Wi-Fi fingerprinting. The signal strengths at different places are measured and stored in a database which constitutes a map. The strength of a signal measured by the mobile user device is then compared with this database to estimate its position. However, several limitations exist. The user must manually create or share a map of static fingerprints of the environment before he can localize any mobile user device. Also, relying on static fingerprinting is assuming that the environment of the mobile user device does not change. However, as the human body mainly consists of water, the presence of a person in the environment of an access point or the mobile user device can already have an impact on the distribution of signals in the environment and change its dynamics. Further, many access points are now configured to adapt their transmission power based on several parameters. These transmission power adaptations also require a continuous adaptation of the Wi-Fi fingerprints.

Several systems have been developed for monitoring Wi-Fi systems in a more dynamic way and generating automated Wi-Fi fingerprints. A first solution relies on the determination of the optimal installation placement and parameters of the access points prior to installing them. Simple interactive mapping tools, such as the AirTight Planner from AirTight Networks, described at http://www.airtightnetworks.com/home/products/AirTight-Planner.htm, already allow the creation of a repository of common building materials and a variety of objects. The user drops objects and walls on a floor plan provided by a software interface. The mapping tools generate a rich visualization of the system based for instance on the signal strength, link speed, redundancy, interference, wireless intrusion detection, etc. This site survey-based technique requires an optimal access point deployment. Even though it could be feasible and affordable at large scale, like for instance for company buildings, it would be hardly efficient for home scenarios where access points from neighbours are readily deployed and consequently introduce changes in the fingerprints.

A second solution relies on the deployment of a number of stationary sniffers (also called air monitors or access points) separate from the system. The scientific publication "From MAP to DIST: the Evolution of a Large-scale WLAN Monitoring System" by Tan et al. published in IEEE Transactions on Mobile Computing, Vol. 13, No. 1 in January 2014 describes a large scale WLAN monitoring system developed at Dartmouth College (Dartmouth Internet Security Testbed, DIST). A large portion of the campus was covered with access points. Even though challenges such as performance and scalability, security and privacy, and management and monitoring of the system were addressed during the design and the implementation of DIST, the solution requires dedicated hardware for monitoring the Wi-Fi network and dynamically updating the fingerprints.

A third solution is presented in the scientific presentation "A mobile crowdsensing based indoor WiFi monitoring system" by Radu et al. published in the proceedings of the International Conference on Network and Service Management" which took place from the 14^{th} to the 18^{th} of October 2013. This approach moves the monitoring perspective from the infrastructure to the client. The monitoring of the system is performed by the mobile user device itself and is indeed continuous thanks to the mobility of the users.

A fourth solution is described in the scientific presentation "WiFi-SLAM using Gaussian process latent variable models" by Ferris et al. published in the proceedings of the International Joint Conference on Artificial Intelligence which took place from the 6th to the 12th of January 2007. This technique uses a Gaussian process latent variable model to determine the latent-space locations of unlabelled signal strength data. A Gaussian process latent variable model is combined to an appropriate motion dynamics model. This combination can be used to reconstruct a topological connectivity graph from a signal strength sequence which, in combination with the learned Gaussian process signal strength model, can be used to perform efficient localization.

Even though the above third and fourth solutions monitor Wi-Fi systems in a more dynamic way and generate automatic Wi-Fi fingerprints, they rely on the use of a personal mobile user device. This approach depends on user participation in the fingerprint update process and can hardly cope with sudden changes in the configuration of the environment.

The scientific presentation "ArrayTrack: a fine-grained indoor location system" by Xiong et al. published in the proceedings of the USENIX Symposium on Networked Systems Design and Implementation which took place from the 2nd to the 5th of April 2013 presents an access point that can measure the angle of arrival of a signal, therefore providing an estimate of the relative orientation of neighbouring access points. Indeed, when a neighbouring access point transmits an information packet, the ArrayTrack access points overhear the transmission, and each of them computes angle of incidence information from the incoming frame. Then, the system aggregates the angle of incidence of the access points at a central backend server to estimate the location of the client. ArrayTrack combines the angle of incidence spectra of several access points and, using trigonometry, estimates the likelihood of the mobile user device to be at the computed location.

The Chapter 2, entitled "Location Tracking Approaches", of the "Wi-Fi location-based services 4.1 Design Guide" published by Cisco on the 20th of May 2008 reviews the positioning techniques based on Wi-Fi signals. One of the simplest mechanisms of estimating approximate location in any system based on RF "cells" is the concept of cell-of-origin. It does not attempt to resolve the position of the mobile user device beyond indicating the cell with which the mobile device is registered. When the receiving cells provide "received signal strength indication" (RSSI) for mobile user devices, the use of the highest signal strength technique helps localizing the mobile user device on the cell that detects the mobile device with the highest signal strength. Another technique is the Time of Arrival system, based on the precise measurement of the arrival time of a signal transmitted from a mobile user device to several receiving sensors. A third technique is the Time Difference of Arrival technique that uses relative time measurements at each receiving sensor in place of absolute time measurements. A transmission with an unknown starting time is received at various receiving sensors, with only the receivers requiring time synchronisation. A fourth technique mentioned in the review publication relies on the determination of an angle of incidence at which signals arrive on the receiving sensor. Geometric relationships are used to estimate the location of the mobile user device with respect to each access point.

The last technique described in the review publication from Cisco relies on a measurement of a received signal strength (RSS). The RSS is measured by either a mobile user device or a receiving sensor. Knowledge of the transmitter output power, cable losses, and antenna gains as well as the appropriate path loss model allows to solve the distance between the wireless access point and the mobile user device. The path loss is the difference between the level of the transmitted signal, measured at the wireless access point, and the level of the received signal, measured at the mobile user device. The signal strength information used to determine the position can be obtained either from the access point reporting the signal strength at which it receives mobile use device transmissions, or from the mobile user device reporting the signal strength at which it receives transmissions from the access point.

It is an objective of the present invention to disclose a wireless access point, a mobile user device and the related methods that overcome the above identified shortcomings of existing tools. More particularly, it is an objective to disclose such wireless access point, mobile user device and methods for dynamically determining and monitoring the position of a mobile user device in a wireless data transmission system, without a need for additional sensing or monitoring hardware and without a need for user participation in dynamically updating fingerprint maps. It is a further objective to disclose such a system that enables to determine the mobile user device location is a fast and efficient manner.

### Summary of the Invention

According to a first aspect of the present invention, the above defined objectives are realized by a wireless access point adapted to transmit or broadcast information with a variable transmission power, CHARACTERIZED IN THAT the wireless access point comprises:
- an encoding module adapted to encode its variable transmission power into an information packet; and
- a transmission module adapted to transmit or broadcast the information packet.

This way, the wireless access point itself provides information which can be used by the mobile user device with wireless data connectivity to autonomously determine its position. The wireless access point is knowledgeable on its own variable transmission power of the information. An encoding module encodes this transmission power value directly in an information packet which is transmitted by a transmission module to a mobile user device with wireless connectivity or broadcasted by a transmission module in the environment of the wireless access point. Any mobile user device with wireless data connectivity receiving and decoding this information packet consequently becomes aware of the transmission power value of the wireless access point. If the mobile user device comprises a receiver measuring the signal strength of the received signal transmitted or broadcasted by the wireless access point, or if the mobile device has another way to obtain the received power value, it can evaluate the distance from his position to the wireless access point. Knowing the losses per unit of length induced on the signal strength by the environment, and knowing the power difference calculated between the received signal strength and the transmission power value, it becomes possible for the mobile user device to calculate the distance between the wireless access point and the mobile user device. There is no need to maintain fingerprints and consequently no need for dedicated hardware or software that assists in monitoring fingerprints. Further, the invention is fast and efficient as it enables the mobile user device to autonomously determine its position.

According to an optional embodiment, the wireless access point is further characterized in that the information packet is a beacon frame.

Wireless data communications are supported by various frame types. In addition to data frames, management and control frames that support data transfer also exist. The beacon frame, which is a type of management frame, enables access points to establish and maintain communications in an orderly fashion. These beacon frames are used by an access point to advertise its presence (e.g. comprises the SSID) and can also specify vendor-specific data. In wireless data transmission systems, access points periodically send beacon frames. In general, the beacon interval is set to 100ms, which provides good performance for most applications. As the beacon frames can be picked up without establishing a connection to the access point (hence no need to know for instance the encryption key of an access point), they can be conveniently leveraged for sharing transmission power values. The fact that they are intrinsic to wireless access points makes their use cheap, easy and compatible with existing technologies, which implies that no time needs to be spent on the development of a new technology. An alternative to the use of beacon frames is the establishment of a new management frame for use in wireless data communications and comprising information over the transmission power value of access points. This would require time and expensive adaptations.

According to the 802.11 u specification, the beacon frames of the access points can include location fields such that an access point can for example determine its position using a satellite positioning system such as GPS, and further advertise its GPS coordinates. This way, access points can automatically become aware of each other's locations and consequently calculate an estimation of the distances separating them. Both the spatial model of the access points in the vicinity and their signal fingerprints can be dynamically constructed. Also, a mobile user device can determine its absolute location by simply receiving the beacon frame of an access point in his vicinity. This implies that it not required for the mobile user device to know the position of the access point in advance, or to look it up in a database. The determination of the relative and absolute position of a mobile user device with respect to an access point is then fully contained to the wireless network.

The white papers "Hotspot 2.0: Making Wi-Fi as easy to use and secure as cellular", and "How Interworking Works: a detailed look at 802.11 u and Hotspot 2.0 mechanisms" are both published by the Ruckus Wireless Inc. in July 2013, and both already suggest that it is possible extend the beacon frame with extra specific information. Both publications describe the 802.11 u specification, which is a new set of protocols to enable cellular-like roaming ratified by the IEEE in February 2011, and the Hotspot 2.0, which is a technical program and specification ratified by the Wi-Fi alliance. The Hotspot 2.0 is based on the IEEE 802.11u standard. One of the motivations for 802.11u is to allow mobile user devices with data connectivity to learn more about a network and which capabilities the network can support before deciding to join it. When a user with a Hotspot 2.0 capable mobile user device comes within range of a Hotspot 2.0 capable access point, the device will automatically open up a dialog with that access point to determine its capabilities. In 802.11 u, mobile user devices learn about access point networks via beacons and probe response frames. Each beacon or probe response carries information about the access point's capabilities in a component of the frame called an information "element". The 802.11u specification therefore focuses on enhancing network discovery by adding new information elements to these frames.

According to an optional embodiment, the wireless access point is further characterized in that the transmission module of the wireless access point is further adapted to transmit the information packet to a neighbouring wireless access point.

This way, an access point is knowledgeable on its own transmission power and it can share that information with another access point located in its environment by transmission or broadcasting of its information packet.

According to an optional embodiment, the wireless access point is further characterized in that the wireless access point further comprises:
- a signal strength measuring module adapted to measure a signal strength of a signal received from a neighbouring wireless access point; and
- a receiver adapted to receive and decode an information packet similar to the transmission packet transmitted or broadcasted by the neighbouring wireless access point.

This way, any access point can pro-actively discover nearby access points. A wireless access point therefore is able to transmit or broadcast information about its own transmission power. But it is also adapted to receive information transmitted or broadcasted by other access points in its environment. A neighbouring wireless access point transmits or broadcasts an information packet comprising its own transmission power value. The wireless access point is also able to receive that signal thanks to the receiver. The receiver further decodes the information packet, and then provides to the wireless access point a direct access to the transmission power of the neighbouring wireless access point. The wireless access point further comprises a signal strength measuring module which is able to measure the power value of the signal the wireless access point receives from the neighbouring wireless access point. Each wireless access point is then fed at least three values: its own transmission power, the transmission power of another neighbouring wireless access point and the power of the signal it receives from that same neighbouring wireless access point. The fact that the information packet from the neighbouring wireless access point is similar in format and nature to the information packet from the wireless access point allows communication between several neighbouring wireless access points.

According to an optional embodiment, the wireless access point is further characterized in that the wireless access point further comprises a distance calculating module adapted:
- to calculate a power difference between said transmission power of said neighbouring wireless access point and said signal strength; and
- to calculate, from said power difference, a corresponding access point distance between said wireless access point and said neighbouring wireless access point.

Each wireless access point is fed at least three values: its own transmission power, the transmission power of another neighbouring wireless access point and the power of the signal it receives from that same neighbouring wireless access point. Each wireless access point further comprises a distance calculating module adapted to calculate the power difference between the transmission power of the neighbouring wireless access point and the signal strength of the signal the wireless access point receives. The information packet transmitted or broadcasted by the neighbouring wireless access point experiences losses during transmission as it is absorbed by e.g. metals and walls and water, and as it is reflected by the environment. Assuming the losses induced by the environment per unit of length are calibrated, and using the power difference calculated by the distance calculating module, each wireless access point is then adapted to calculate the distance that separates it from every neighbouring wireless access point present in the wireless data transmission system from which it receives a signal. A wireless access point is then able to calculate how far each neighbouring wireless access points from which it receives signals is form its own position. This calculation allows a mapping of the wireless data transmission system, where the exact location of the neighbouring wireless access points is not known, but where the distance between two wireless access points is known. The determination of the relative position of wireless access points present in the system does not require to maintain fingerprints and consequently does not require dedicated hardware or software that assists in monitoring fingerprints. The determination is then made fast and efficient as it enables a wireless access point to autonomously determine its relative position with respect to neighbouring wireless access points.

According to an optional embodiment, the wireless access point is further characterized in that the wireless access point further comprises:
- an angle measurement module adapted to measure an angle of incidence of the signal received from the neighbouring wireless access point; and
   wherein the distance calculating module is further adapted:
- to determine the neighbouring access point from the angle of incidence.

This way, the wireless access point can accurately identify which neighbouring wireless access point is transmitting the signal it is receiving. Let's consider the situation where a wireless access point receives a signal from a neighbouring wireless access point. It is able to calculate the distance separating it from that neighbouring access point. However, measuring the angle of incidence of the signal allows it to accurately identify the location of that neighbouring wireless access point relative to its own position. Indeed, the distance calculation module now computes the additional angle measurement provided by the angle measurement module. It calculates the distance between the wireless access point and the neighbouring wireless access point and it assigns an angle of incidence to the signal received by the wireless access point. The previously established map based on measurements of signal strengths now also provides information about the relative position of neighbouring wireless access points with respect to the position of the wireless access point. Let's consider for instance the situation where two neighbouring wireless access points with identical transmission powers are equally distant to the wireless access point and transmitting their respective information packets. Let's also assume that the losses per unit of length induced by the environment for the signals transmitted by the two neighbouring wireless access points are identical. The wireless access point receives and decodes two information packets, and the signal strength measuring module measures the same signal strength for both signals. It is not possible to make the distinction between the two neighbouring wireless access points. The measurement of an angle of incidence of the signal on the wireless access point is then one additional and accurate measurement that allows making the distinction between the signals transmitted by the neighbouring wireless access points. Depending on the angle measured by the angle measurement module, the distance calculating module can assign one signal to the corresponding neighbouring wireless access point.

According to an optional embodiment, the wireless access point is further characterized in that the information packet transmitted or broadcasted by the wireless access point further comprises a transmission power value of a neighbouring wireless access point and/or the access point distance between the wireless access point and the neighbouring wireless access point, and/or the angle of incidence of the signal received from the neighbouring wireless access point.

This way, a wireless access point picking up the information packet of another wireless access point becomes aware of further relevant data for its localization. Indeed, the wireless access point is knowledgeable on its transmission power, but also on the transmission powers of neighbouring wireless access points. The wireless access point further knows how far the neighbouring wireless access points are from its position. Additionally, it becomes aware of the relative position of each neighbouring wireless access points with respect to its own position.

According to an optional embodiment, the wireless access point is further characterized in that the wireless access point forms part of a Wi-Fi data transmission system comprising a plurality of neighbouring wireless access points similar to said wireless access point.

This way, a wireless access point or a mobile user device with wireless data connectivity can pick up the information packets of several similar wireless access points. The wireless access point of the mobile user device can then calculate how far it is from each wireless access point and calculate its own position with respect to the wireless access points of the Wi-Fi data transmission system. The number of wireless access points influences the accuracy of the calculation of the exact position of the wireless access point or of the mobile user device. The more wireless access points, the more accurate the calculation.

According to a second aspect of the invention, there is a transmitter-implemented method for transmission of information with a variable transmission power, the method comprising:
- encoding the transmission power into an information packet; and
- transmitting or broadcasting the information packet.

This way, the wireless access point itself provides information which can be used by the mobile user device to autonomously determine its position. The wireless access point is knowledgeable on its own variable transmission power. An encoding module encodes the transmission power value directly in an information packet which is then transmitted or broadcasted. Any mobile user device with wireless data connectivity receiving and decoding this information packet consequently becomes aware of the transmission power value of the wireless access point. If the mobile user device comprises a receiver measuring the signal strength of the received signal transmitted or broadcasted by the wireless access point, or if the mobile device has another way to obtain the received power value, it can evaluate the distance from his position to the wireless access point. Knowing the losses per unit of length induced on the signal strength by the environment, and knowing the power difference calculated between the received signal strength and the transmission power value, it becomes possible for the mobile user device to calculate the distance between the wireless access point and the mobile user device. There is no need to maintain fingerprints and consequently no need for dedicated hardware or software that assists in monitoring fingerprints. Further, the invention is fast and efficient as it enables the mobile user device to autonomously determine its position.

According to a third aspect of the invention, the above defined objectives are realized by a mobile user device with wireless data connectivity, the user device comprising:
- a receiving module adapted to receive and decode an information packet transmitted or broadcasted by a wireless access point and comprising a transmission power value;
- a signal strength measuring module adapted to measure a signal strength of a signal transmitted or broadcasted by the wireless access point and received by the user device; and
- a distance calculating module adapted to calculate a power difference between the transmission power value and the signal strength, and further adapted to calculate a corresponding user device distance between the user device and the wireless access point using the power difference.

This way, a mobile user device with wireless data connectivity picking up the information packet of a wireless access point becomes aware of relevant data for its localization. Indeed, the mobile user device is knowledgeable on the transmission power of the wireless access point, and it can measure the power of the signal it receives from the wireless access point. The signal can also be the beacon frame of the wireless access point or it can be a different signal that is assumed to be sent with substantially the same transmission power. Assuming the losses environment per unit of length induced by the are calibrated, and using the power difference calculated by the distance calculating module, a mobile user device is then adapted to calculate the distance that separates it from the wireless access point of the wireless data transmission system and from which it picks the information packet up. The determination of the relative or absolute position of the mobile user device is performed by the mobile user device itself, for example by a location determination module that relies on the user device distance and the angle of incidence. This determination does not require the transmission of additional information. Indeed, if the determination of the position of the mobile user device is performed by the wireless access point or by a distance calculating module independent from the mobile user device or the wireless access point, the result of the calculation needs to be transmitted back to the interested entity, i.e. the mobile user device. This leads to latency and possible delays between the moment when the mobile user device receives a signal and the moment when the mobile user device receives information about its position. During the delay, the position of the mobile user device can have changed, which means that the delivered information about its position is no longer correct. Also, the fact that the distance calculation module is comprised in the mobile user device reduces the power consumption of the wireless data transmission system as no additional signal needs to be sent between the wireless access point and the mobile user device.

According to an optional embodiment, the mobile user device is further characterized in that the information packet is a beacon frame.

Wireless data communications are supported by various frame types. In addition to data frames, management and control frames that support data transfer also exist. The beacon frame, which is a type of management frame, enables access points to establish and maintain communications in an orderly fashion. These beacon frames are used by an access point to advertise its presence (e.g. comprises the SSID) and can also specify vendor-specific data. In wireless data transmission systems, access points periodically send beacon frames. In general, the beacon interval is set to 100ms, which provides good performance for most applications. As the beacon frames can be picked up without establishing a connection to the access point (hence no need to know for instance the encryption key of an access point), they can be conveniently leveraged for sharing transmission power values. The fact that they are intrinsic to wireless access points makes their use cheap, easy and compatible with existing technologies, which implies that no time needs to be spent on the development of a new technology. An alternative is the establishment of a new management frame for use in wireless data communications and comprising information over the transmission power value of access points. This would also require time and expensive adaptations.

According to the 802.11 u specification, the beacon frames of the access points can include location fields such that an access point can for example determine its position using a satellite positioning system such as GPS, and further advertise its GPS coordinates. This way, access points can automatically become aware of each other's locations and consequently calculate an estimation of the distances separating them. Both the spatial model of the access points in the vicinity and their signal fingerprints can be dynamically constructed. Also, a mobile user device can determine its absolute location by simply receiving the beacon frame of an access point in his vicinity. This implies that it not required for the mobile user device to know the position of the access point in advance, or to look it up in a database. Knowing the GPS coordinates of the wireless access point, the mobile user device can calculate its absolute position in the system. The determination of the relative and absolute position of a mobile user device with respect to an access point is then fully contained to the wireless network.

According to an optional embodiment, the mobile user device is further characterized in that the receiving module is further adapted:
- to receive from a plurality of wireless access points an information packet similar to the information packet;
   and wherein the signal strength measuring module is further adapted:
- to measure a signal strength of a plurality of signals transmitted or broadcasted by the plurality of wireless access points and received by the user device; and
   wherein the distance calculating module is further adapted:
- to calculate a power difference between the transmission power value and the signal strength for each wireless access point, and further adapted to calculate a

plurality of corresponding user device distances between the user device and each wireless access point using said power differences.

This way, a mobile user device with wireless data connectivity picking up the information packet of several wireless access points becomes aware of relevant data for its localization. Indeed, the mobile user device is knowledgeable on the transmission powers of all the wireless access point from which it receives a signal. The losses per unit of length induced by the environment are assumed to be calibrated. Using this value and the power difference calculated by the distance calculating module for each wireless access point of the wireless data transmission system, a mobile user device is adapted to calculate the distance that separates it from each and every wireless access point present from which it receives a signal. A mobile user device is then able to calculate how far each wireless access points from which it receives signals is form its own position, and can identify its relative location. The number of wireless access points influences the accuracy of the calculation of the exact position of the mobile user device. The more wireless access points, the more accurate the calculation. In order to save computation time and energy consumption of the complete wireless data transmission system, let's consider the situation where a mobile user device with wireless data connectivity picks up the information packet of a single wireless access point. This wireless access point can provide information in its information packet about its own transmission power, but also about the transmission powers of neighbouring wireless access points. The information packet can also provide information about the distances between the wireless access point and the others wireless access points that it itself calculated.

According to an optional embodiment, the mobile user device is further characterized in that the user device further comprises:
- an angle measuring module adapted to measure an angle of incidence of the signal received from the wireless access point; and
   wherein the distance calculating module is further adapted:
- to determine the wireless access point from the angle of incidence.

This way, the mobile user device can accurately identify which neighbouring wireless access point is transmitting the signal it is receiving. Let's consider the situation where a mobile user device receives a signal from a neighbouring wireless access point. It is able to calculate the distance separating it from that neighbouring access point. However, measuring the angle of incidence of the signal allows it to accurately identify the location of that neighbouring wireless access point relative to its own position. Indeed, the distance calculation module now computes the additional angle measurement provided by the angle measurement module. It calculates the distance between the mobile user device and the neighbouring wireless access point and it assigns an angle of incidence to the signal received by the mobile user device. Let's consider for instance the situation where a mobile user device receives two signals transmitted by two neighbouring wireless access points with identical transmission powers, and where the two wireless access points are equally distant to the mobile user device. Let's also assume that the losses per unit of length induced by the environment for the signals transmitted by the two neighbouring wireless access points are identical. The mobile user device receives and decodes two information packets, and the signal strength measuring module measures the same signal strength for both signals. It is not possible to make the distinction between the two neighbouring wireless access points. The measurement of an angle of incidence of the signal on the mobile user device is then one additional and accurate measurement that allows making the distinction between the signals transmitted by the neighbouring wireless access points. Depending on the angle measured by the angle measurement module, the distance calculating module can assign one signal to the corresponding neighbouring wireless access point.

According to an optional embodiment, the mobile user device is further characterized in that the information packet transmitted or broadcasted by the wireless access point further comprises a transmission power value of a neighbouring wireless access point and/or the access point distance between the wireless access point and the neighbouring wireless access point, and/or the angle of incidence of the signal received from the neighbouring wireless access point by the wireless point.

This way, a mobile user device with wireless data connectivity picking up the information packet of a wireless access point becomes aware of further relevant data for its localization. Indeed, the mobile user device is knowledgeable on the transmission power of the wireless access point, but also to the transmission powers of neighbouring wireless access points. The mobile user device further knows how far the neighbouring wireless access points are from the wireless access point. Further, it becomes aware of the relative position of each neighbouring wireless access points with respect to the position of the wireless access point.

According to a fourth aspect of the invention, there is a user-implemented method for localization of a mobile user device with wireless data connectivity, the method comprising:
- receiving from a wireless access point an information packet comprising a transmission power value;
- measuring a signal strength of a signal transmitted or broadcasted by the wireless access point and received by the user device;
- calculating a power difference the transmission power value and the signal strength; and
- calculating a corresponding user device distance between the user device and the wireless access point using the user power difference.

This way, a mobile user device with wireless data connectivity picking up the information packet of a wireless access point becomes aware of relevant data for its localization. Indeed, the mobile user device is knowledgeable on the transmission power of the wireless access point, and it can measure the power of the signal it receives from the wireless access point. Assuming the losses per unit of length induced by the environment are calibrated, and using the power difference calculated by the distance calculating module, a mobile user device is then adapted to calculate the distance that separates it from the wireless access point of the wireless data transmission system and from which it picks up the information packet.

### Brief Description of the Drawings

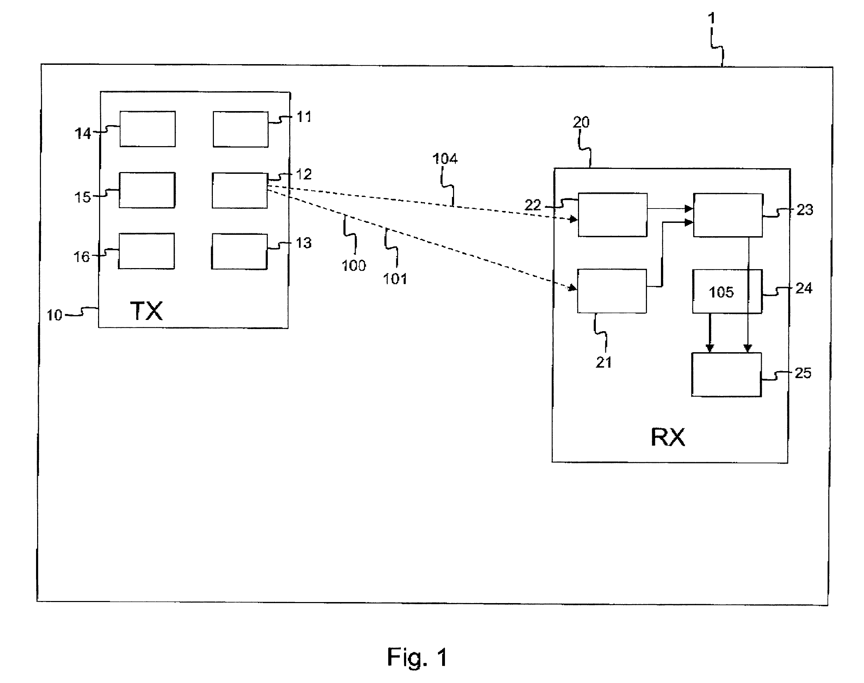

Fig. 1 schematically illustrates a Wi-Fi data transmission system comprising one wireless access point and a mobile user device with data connectivity.

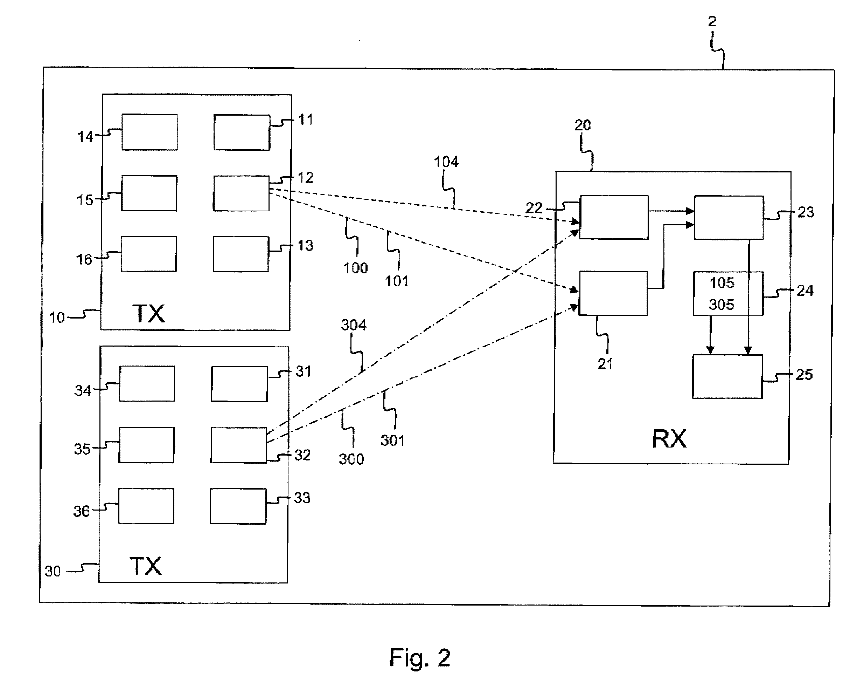

Fig. 2 schematically illustrates a Wi-Fi data transmission system comprising two wireless access points and a mobile user device with data connectivity, where the localization of the mobile user device is performed by relatively positioning the mobile user device with respect to the two wireless access points.

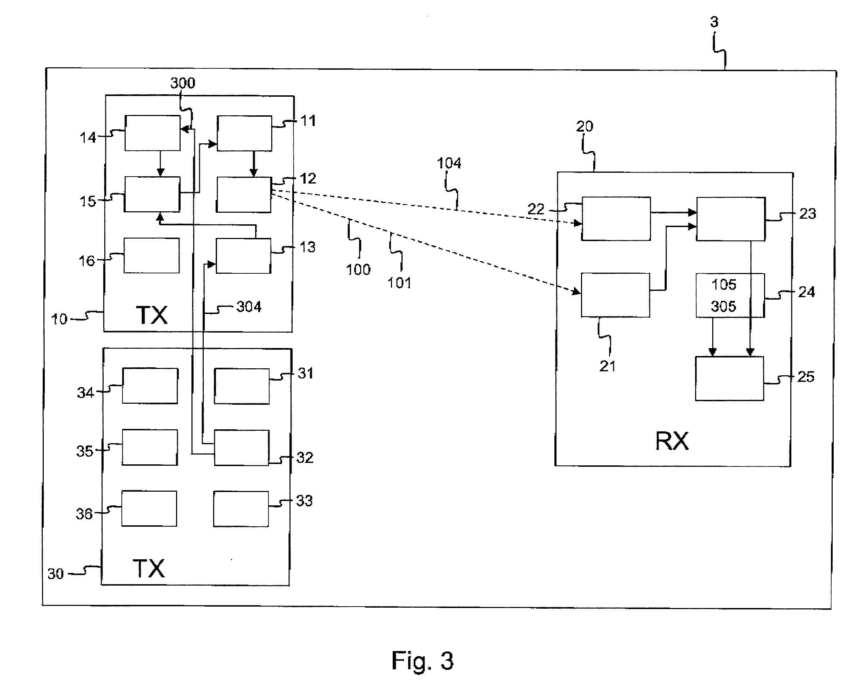

Fig. 3 schematically illustrates a Wi-Fi data transmission system comprising two wireless access points and a mobile user device with data connectivity, where the localization of the mobile user device is performed by relatively positioning the mobile user device with respect to the one wireless access point that is provided information relative to its position with respect to the neighbouring wireless access points.

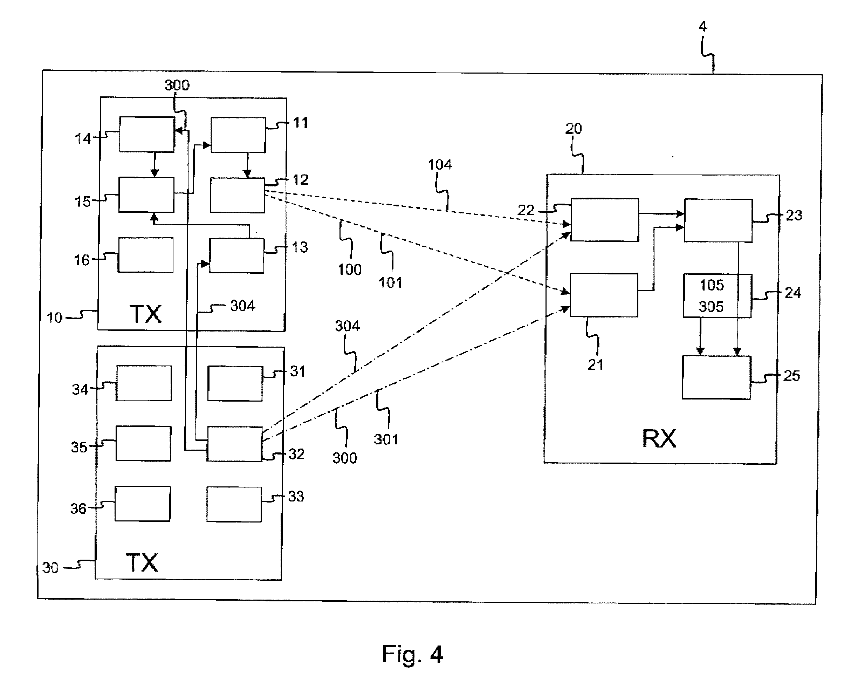

Fig. 4 schematically illustrates a Wi-Fi data transmission system comprising two wireless access points and a mobile user device with data connectivity, where the localization of the mobile user device is performed by relatively positioning the mobile user device with respect to the two wireless access points, and where the mobile user device is provided information relative to the neighbouring wireless access point by each wireless access point.

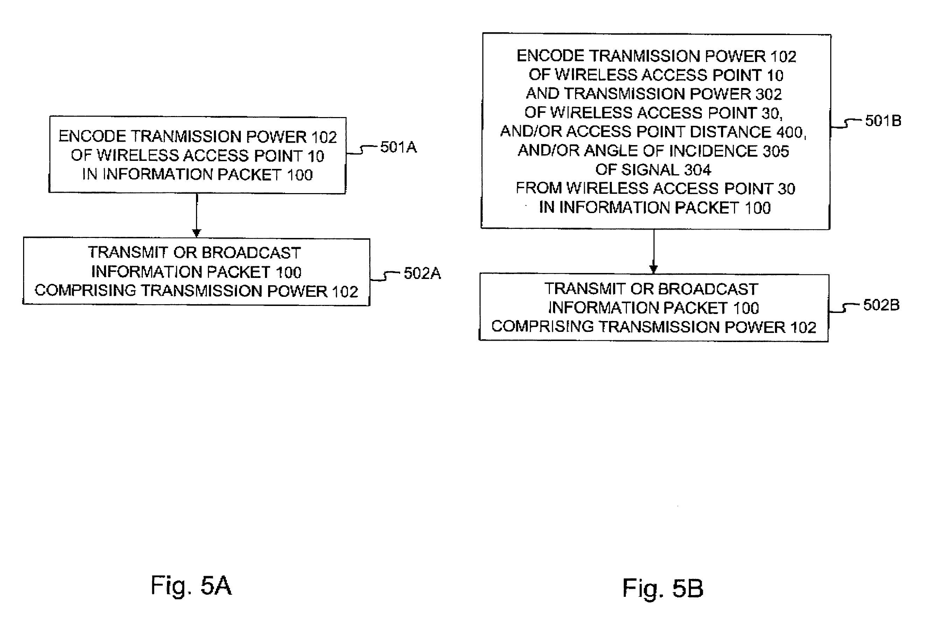

Fig. 5A and 5B schematically illustrate the steps of the method according to which a wireless access point transmits or broadcasts its variable transmission power encoded in an information packet.

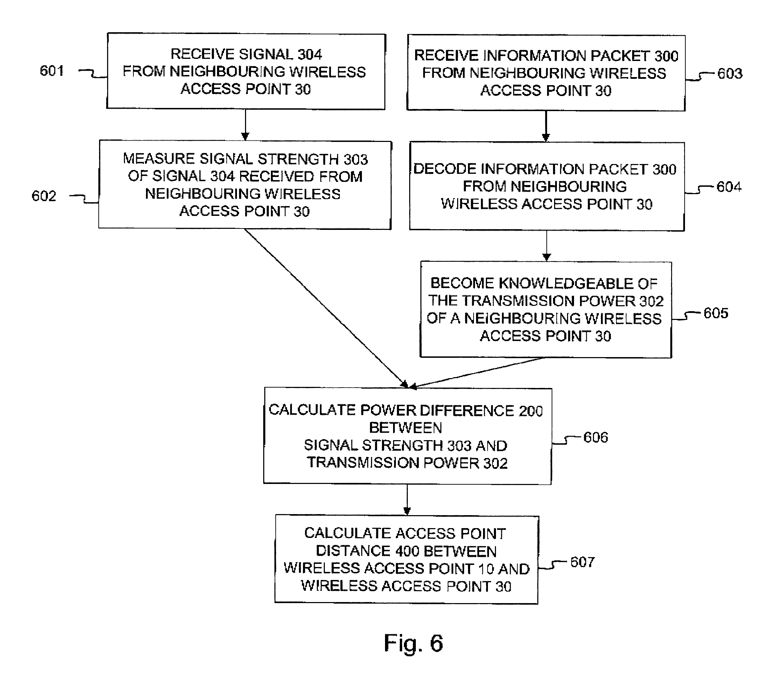

Fig. 6 schematically illustrates the steps of the method according to which a wireless access point calculates its position with respect to a neighbouring wireless access point, taking into account a power difference between the strength of a signal transmitted or broadcasted by the neighbouring wireless access point and its transmission power encoded in an information packet.

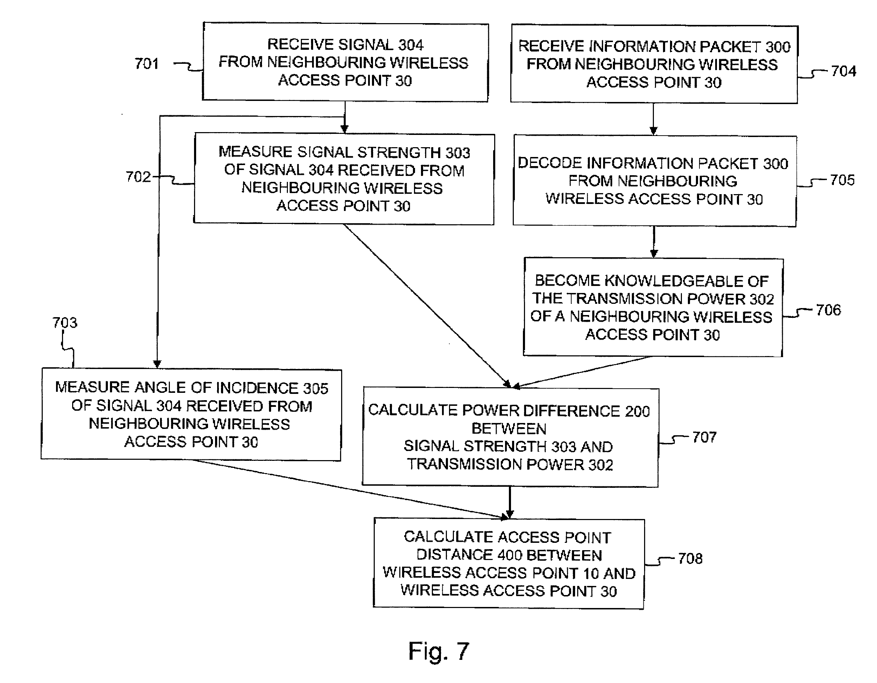

Fig. 7 schematically illustrates the steps of the method according to which a wireless access point calculates its position with respect to a neighbouring wireless access point and determines the position of the neighbouring wireless access point, taking into account a power difference between the strength of a signal transmitted or broadcasted by the neighbouring wireless access point and its transmission power encoded in an information packet, and the angle of incidence of the signal on the wireless access point.

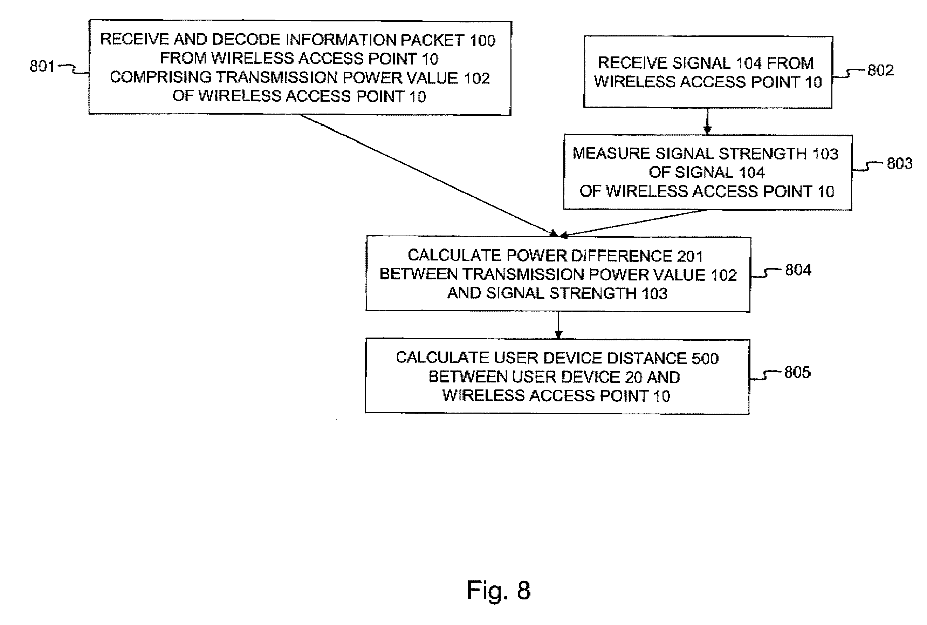

Fig. 8 schematically illustrates the steps of the method according to which a mobile user device with data connectivity calculates its position with respect to a wireless access point, taking into account a power difference the strength of a signal transmitted or broadcasted by the wireless access point and its transmission power encoded in an information packet.

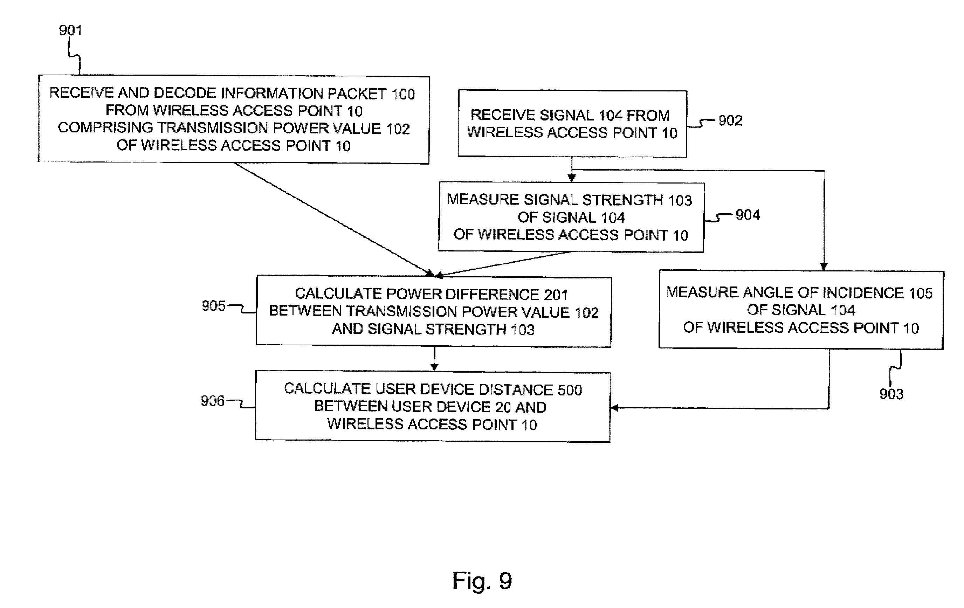

Fig. 9 schematically illustrates the steps of the method according to which a mobile user device with data connectivity calculates its position with respect to a wireless access point, taking into account a power difference between the strength of a signal transmitted or broadcasted by the wireless access point and its transmission power encoded in an information packet, and the angle of incidence of the signal on the mobile user device.

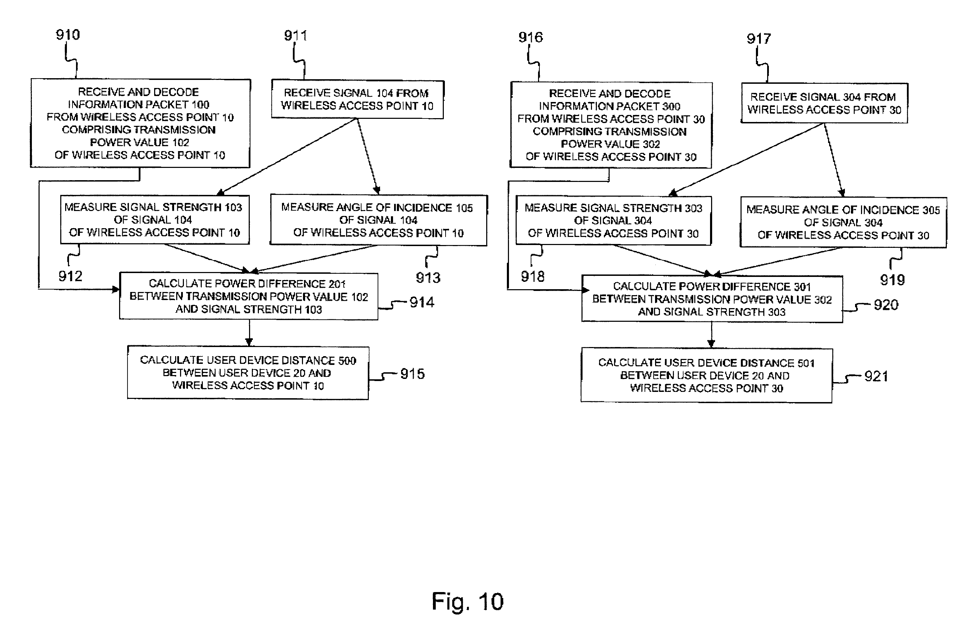

Fig. 10 schematically illustrates the steps of the method according to which a mobile user device with data connectivity calculates its position with respect to a wireless access point and to a neighbouring wireless access point, taking into account a power difference between the strength of a signal transmitted or broadcasted by the wireless access point and its transmission power encoded in an information packet, another power difference between the strength of a signal transmitted or broadcasted by a neighbouring wireless access point and its transmission power encoded in an information packet, and the angles of incidence of both signals on the mobile user device.

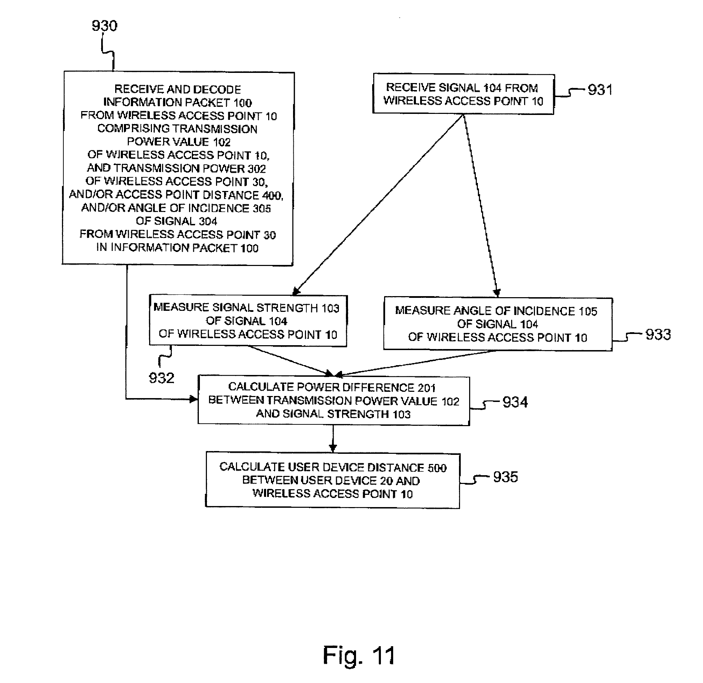

Fig. 11 schematically illustrates the steps of the method according to which a mobile user device with data connectivity calculates its position with respect to a wireless access point and to a neighbouring wireless access point, taking into account a power difference between the strength of a signal transmitted or broadcasted by the wireless access point and its transmission power encoded in an information packet and its transmission power encoded in an information packet, the relative position of the neighbouring wireless access point with respect to the wireless access point, and the angle of incidence of the signal on the mobile user device.

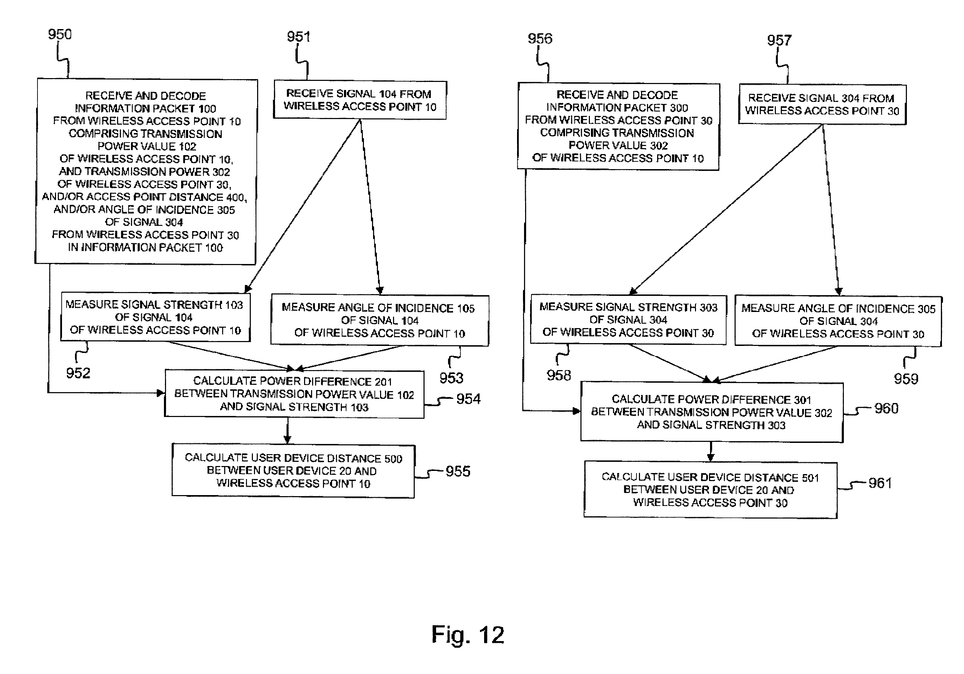

Fig. 12 schematically illustrates the steps of the method according to which a mobile user device with data connectivity calculates its position with respect to a wireless access point and to a neighbouring wireless access point, taking into account a power difference between the strength of a signal transmitted or broadcasted by the wireless access point and its transmission power encoded in an information packet, another power difference between the strength of a signal transmitted or broadcasted by a neighbouring wireless access point and its transmission power encoded in an information packet, the relative position of the neighbouring wireless access point with respect to the wireless access point, and the angles of incidence of both signals on the mobile user device.

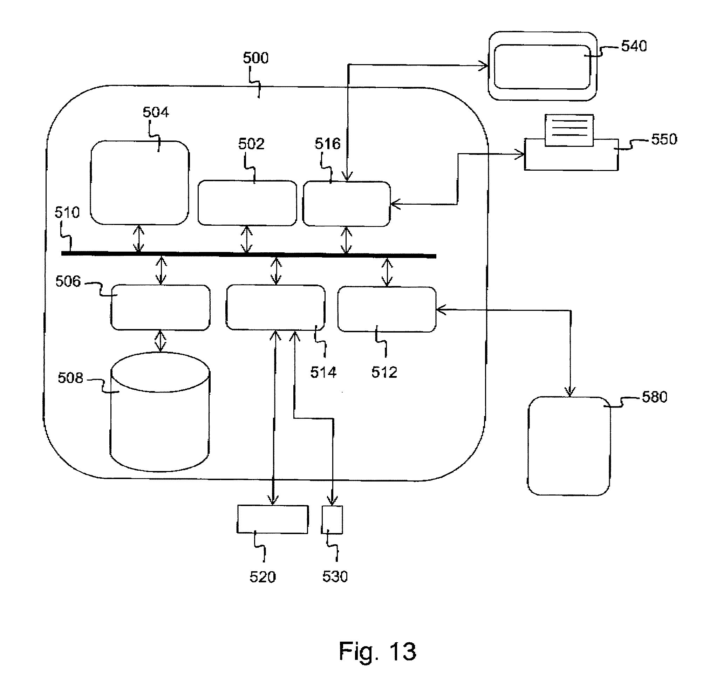

Fig. 13 schematically illustrates a suitable computing system for hosting the Wi-Fi data transmission system of Fig. 1.

### Detailed Description of Embodiment(s)

According to an embodiment shown in Fig. 1, a Wi-Fi data transmission system 1 comprises one wireless access point 10 and a mobile user device with data connectivity 20. The wireless access point 10 comprises an encoding module 11, a transmission module 12, a signal strength measuring module 13, a receiver 14, a calculating module 15, and an angle measurement module 16. The mobile user device 20 comprises a receiving module 21, a signal strength measuring module 22, a distance calculating module 23, and an angle measuring module 24. The transmission module 12 of the wireless access point 10 transmits or broadcasts an information packet 100 in which its encoding module 11 has encoded the variable transmission power 102 of the wireless access point 10. This information packet can be the beacon frame 101 of the wireless access point 10. An advantage of the beacon frame 101 is that it can be picked up by any mobile device 20 without having to establish connectivity with the access point 10. The information packet 100 is picked up by the mobile user device 20 and received by the receiving module 21 of the mobile user device 20. The transmission module 12 of the wireless access point 10 also transmits or broadcasts a signal 104 that is picked up by the mobile user device 20 and received by the signal strength measuring module 22 of the mobile user device 20. The signal 104 can also be the beacon frame 101 or it can be a different signal that is assumed to be sent with substantially the same transmission power 102. The distance calculating module 23 of the mobile user device 20 can therefore calculate the relative position of the mobile user device with respect to the wireless access point 10. The angle measuring module 24 of the mobile user device 20 further measures the angle of incidence 105 of the signal 104 of the wireless access point 10. The measurement of the angle of incidence 105 allows the mobile user device 20 to associate the signal 104 to the wireless access point 10. The location determination module 25 of the mobile user device 20 determines the relative or absolute position or coordinates of the user mobile device 20 with respect to the wireless access point 10 from the calculation of the user device distance 500 and the angle of incidence 105. The mobile user device 20 can accurately determine the position of the wireless access point 10 in the Wi-Fi data transmission system 1, and is therefore knowledgeable of its own position in the system 1.

According to an embodiment shown in Fig. 2, a Wi-Fi data transmission system 2 comprises two wireless access points 10, 30 and a mobile user device with data connectivity 20. The wireless access points 10, 30 each comprise an encoding module 11, 31, a transmission module 12, 32, a signal strength measuring module 13, 33, a receiver 14, 24, a calculating module 15, 35, and an angle measurement module 16, 36. The mobile user device 20 comprises a receiving module 21, a signal strength measuring module 22, a distance calculating module 23, and an angle measuring module 24. The transmission module 12 of the wireless access point 10 transmits or broadcasts an information packet 100 in which its encoding module 11 has encoded the variable transmission power 102 of the wireless access point 10. This information packet can be the beacon frame 101 of the wireless access point 10. The information packet 100 is picked up by the mobile user device 20 and received by the receiving module 21 of the mobile user device 20. The transmission module 12 of the wireless access point 10 also transmits or broadcasts a signal 104 that is picked up by the mobile user device 20 and received by the signal strength measuring module 22 of the mobile user device 20. Similarly, the transmission module 32 of the wireless access point 30 transmits or broadcasts an information packet 300 in which its encoding module 31 has encoded the variable transmission power 302 of the wireless access point 30. This information packet can be the beacon frame 301 of the wireless access point 30. The information packet 300 is picked up by the mobile user device 20 and received by the receiving module 21 of the mobile user device 20. The transmission module 32 of the wireless access point 30 also transmits or broadcasts a signal 304 that is picked up by the mobile user device 20 and received by the signal strength measuring module 22 of the mobile user device 20. The distance calculating module 23 of the mobile user device 20 can therefore calculate the relative position of the mobile user device with respect to the wireless access point 10 and with respect to the wireless access point 30. The angle measuring module 24 of the mobile user device 20 further measures the angle of incidence 105 of the signal 104 of the wireless access point 10 and an angle of incidence 305 of the signal 304 of the wireless access point 30. The measurement of the angles of incidence allows the mobile user device 20 to associate a wireless access point with its respective signal. Therefore, the mobile user device 20 can accurately determine the position of the two wireless access points 10, 30 in the Wi-Fi data transmission system 2, and is therefore knowledgeable of its own position in the system 2.

According to an embodiment shown in Fig. 3, a Wi-Fi data transmission system 3 comprises two wireless access points 10, 30 and a mobile user device with data connectivity 20. The wireless access points 10, 30 each comprise an encoding module 11, 31, a transmission module 12, 32, a signal strength measuring module 13, 33, a receiver 14, 24, a calculating module 15, 35, and an angle measurement module 16, 36. The mobile user device 20 comprises a receiving module 21, a signal strength measuring module 22, a distance calculating module 23, and an angle measuring module 24. The transmission module 12 of the wireless access point 10 transmits or broadcasts an information packet 100 in which its encoding module 11 has encoded the variable transmission power 102 of the wireless access point 10. This information packet can be the beacon frame 101 of the wireless access point 10. The information packet 100 is picked up by the mobile user device 20 and received by the receiving module 21 of the mobile user device 20. The transmission module 12 of the wireless access point 10 also transmits or broadcasts a signal 104 that is picked up by the mobile user device 20 and received by the signal strength measuring module 22 of the mobile user device 20. Similarly, the transmission module 32 of the neighbouring wireless access point 30 transmits or broadcasts an information packet 300 in which its encoding module 31 has encoded the variable transmission power 302 of the neighbouring wireless access point 30. This information packet can be the beacon frame 301 of the neighbouring wireless access point 30. The information packet 300 is only picked up by the receiver 14 of the wireless access point 10. The signal strength measuring module 13 of the wireless access point 10 measures the signal strength 304 of the information packet 300 of the neighbouring wireless access point 30. The angle measurement module 16 of the wireless access point 10 measures the angle of incidence 305 on the wireless access point 10 of the signal 304 transmitted or broadcasted by the neighbouring wireless access point 30. The calculating module 15 of the wireless access point 10 can therefore calculate the distance separating the wireless access point 10 from the wireless access point 30, and the wireless access point 10 is able to determine the location of the neighbouring wireless access point 30 taking the angle of incidence 305 into account. The encoding module 11 of the wireless access point 10 can encode this additional data about the neighbouring wireless access point 30 in the information packet 100 of the wireless access point 10 that is being transmitted or broadcasted by the transmission module 12 of the wireless access point 10. This implies that the mobile user device 20 receives, through its receiving module 21, information from the wireless access point 10 concerning the neighbouring wireless access point 30. The distance calculating module 23 of the mobile user device 20 can therefore calculate the relative position of the mobile user device with respect to the wireless access point 10 that already determined its position with respect to the neighbouring wireless access point 30. Therefore, the mobile user device 20 can estimate its position with respect to the neighbouring wireless access point 30. The angle measuring module 24 of the mobile user device 20 further measures the angle of incidence 105 of the signal 104 of the wireless access point 10.The measurement of the angle of incidence 104 allows the mobile user device 20 to associate the wireless access point 10 with its signal 104. Therefore, the mobile user device 20 can accurately determine the position of the wireless access point 10 in the Wi-Fi data transmission system 3, and is therefore knowledgeable of its own position in the system 3.

According to an embodiment shown in Fig. 4, a Wi-Fi data transmission system 4 comprising two wireless access points 10, 30 and a mobile user device with data connectivity 20. The wireless access points 10, 30 each comprise an encoding module 11, 31, a transmission module 12, 32, a signal strength measuring module 13, 33, a receiver 14, 24, a calculating module 15, 35, and an angle measurement module 16, 36. The mobile user device 20 comprises a receiving module 21, a signal strength measuring module 22, a distance calculating module 23, and an angle measuring module 24. The transmission module 12 of the wireless access point 10 transmits or broadcasts an information packet 100 in which its encoding module 11 has encoded the variable transmission power 102 of the wireless access point 10. This information packet can be the beacon frame 101 of the wireless access point 10. The information packet 100 is picked up by the mobile user device 20 and received by the receiving module 21 of the mobile user device 20. The transmission module 12 of the wireless access point 10 also transmits or broadcasts a signal 104 that is picked up by the mobile user device 20 and received by the signal strength measuring module 22 of the mobile user device 20. Similarly, the transmission module 32 of the wireless access point 30 transmits or broadcasts an information packet 300 in which its encoding module 31 has encoded the variable transmission power 302 of the neighbouring wireless access point 30. This information packet can be the beacon frame 301 of the neighbouring wireless access point 30. The information packet 300 is picked up by the mobile user device 20 and received by the receiving module 21 of the mobile user device 20. The transmission module 32 of the neighbouring wireless access point 30 also transmits or broadcasts a signal 304 that is picked up by the mobile user device 20 and received by the signal strength measuring module 22 of the mobile user device 20. The receiver 14 of the wireless access point 10 further picks up the information packet 300 of the neighbouring wireless access point 30. The signal strength measuring module 13 of the wireless access point 10 measures the signal strength 304 of the information packet 300 of the neighbouring wireless access point 30. The calculating module 15 of the wireless access point 10 can therefore calculate the distance separating the wireless access point 10 from the neighbouring wireless access point 30, and the encoding module 11 of the wireless access point 10 can encode this additional data in the information packet 100 of the wireless access point 10 that is being transmitted or broadcasted by the transmission module 12 of the wireless access point 10. This implies that the mobile user device 20 receives, through its receiving module 21, information from the wireless access point 10 concerning the neighbouring wireless access point 30. The distance calculating module 23 of the mobile user device 20 can therefore calculate the relative position of the mobile user device 20 with respect to each wireless access point 10, 30 while it is aware of the relative position of the wireless access point 10 with respect to the neighbouring wireless access point 30. Therefore, the mobile user device 20 can more accurately estimate its position with respect to the wireless access points 10, 30, as the relative position of the wireless access point 30 is provided by its own calculation, and by the calculation of the relative position of the neighbouring wireless access point 30 with respect to the wireless access point 10. The angle measuring module 24 of the mobile user device 20 further measures the angle of incidence 105 of the signal 104 of the wireless access point 10, and the angle of incidence 305 of the signal 304 of the neighbouring wireless access point 30. The measurement of the angles of incidence 104, 105 allows the mobile user device 20 to associate the wireless access point 10 with its signal 104, and the neighbouring wireless access point 30 with its signal 304. Therefore, the mobile user device 20 can accurately determine the position of the wireless access points 10, 30 in the Wi-Fi data transmission system 4, and is therefore knowledgeable of its own position in the system 4.

According to an embodiment shown in Fig. 5A-B, a wireless access point 10 encodes its variable transmission power 102 in an information packet 100, as shown in 501A, before transmitting or broadcasting the information packet 100, as shown in 501 B. The wireless access point 10 can also encode in the information packet 100 its variable transmission power 102, the variable transmission power 302 of a neighbouring wireless access point 30 and/or an access point distance 400 between the wireless access point 10 and the neighbouring wireless access point 30, calculated by the wireless access point 10, and/or the angle of incidence 305 of the signal 304 of the neighbouring wireless access point 30, as shown in 501 B, before transmitting or broadcasting the information packet 100 as shown in 502B.

According to an embodiment shown in Fig. 6, a wireless access point 10 calculates its relative position with respect to a neighbouring wireless access point 30. The wireless access point 10 picks up an information packet 300 transmitted or broadcasted by the neighbouring wireless access point 30, as shown in 603. The wireless access point 10 decodes the information packet 300, as shown in 604, and therefore becomes knowledgeable of the variable transmission power 302 of the neighbouring wireless access point 30, as shown in 605. The wireless access point 10 further receives a signal 304 from the neighbouring wireless access point 30, as shown in 601. The wireless access point 10 measures the strength 303 of the signal 304 transmitted or broadcasted by the neighbouring wireless access point 30, as shown in 602. It then calculates a power difference 200 between the signal strength 303 and the variable transmission power 302 of the neighbouring wireless access point 30, as shown in 606. Taking this power difference 200 into account, the wireless access point 10 calculates an access point distance 400, as shown in 607, which is the distance separating the wireless access point 10 and the neighbouring wireless access point 30.

According to an embodiment shown in Fig. 7, a wireless access point 10 calculates its relative position with respect to a neighbouring wireless access point 30. The wireless access point 10 picks up an information packet 300 transmitted or broadcasted by the neighbouring wireless access point 30, as shown in 704. The wireless access point 10 decodes the information packet 300, as shown in 705, and therefore becomes knowledgeable of the variable transmission power 302 of the neighbouring wireless access point 30, as shown in 706. The wireless access point 10 further receives a signal 304 from the neighbouring wireless access point 30, as shown in 701. The wireless access point 10 measures the strength 303 of the signal 304 transmitted or broadcasted by the neighbouring wireless access point 30, as shown in 702. It then calculates a power difference 200 between the signal strength 303 and the variable transmission power 302 of the neighbouring wireless access point 30, as shown in 707. The wireless access point 10 further measures the angle of incidence 305 of the signal 304 of the neighbouring wireless access point 30 on the wireless access point 10, as shown in 703. Taking this power difference 200 and the angle of incidence 305 into account, the wireless access point 10 calculates an access point distance 400, as shown in 708, which is the distance separating the wireless access point 10 and the neighbouring wireless access point 30, and is able to associate the signal 304 to the correct neighbouring wireless access point 30 and thereby to determine the location of the neighbouring wireless access point 30.

According to an embodiment shown in Fig. 8, a mobile user device 20 with data connectivity calculates its relative position with respect to a wireless access point 10. The mobile user device 20 picks up an information packet 100 transmitted or broadcasted by the wireless access point 10, as shown in 801. The mobile user device 20 decodes the information packet 100, and therefore becomes knowledgeable of the variable transmission power 102 of the wireless access point 10, as shown in 801. The mobile user device 20 further receives a signal 104 from the wireless access point 10, as shown in 802. The mobile user device 20 measures the strength 103 of the signal 104 transmitted or broadcasted by the wireless access point 10, as shown in 803. It then calculates a power difference 201 between the signal strength 103 and the variable transmission power 102 of the wireless access point 10, as shown in 804. Taking this power difference 201 into account, the mobile user device 20 calculates a user device distance 500, as shown in 805, which is the distance separating the mobile user device 20 and the wireless access point 10.

According to an embodiment shown in Fig. 9, a mobile user device 20 with data connectivity calculates its relative position with respect to a wireless access point 10. The mobile user device 20 picks up an information packet 100 transmitted or broadcasted by the wireless access point 10, as shown in 901. The mobile user device 20 decodes the information packet 100 and therefore becomes knowledgeable of the variable transmission power 102 of the wireless access point 10, as shown in 901. The mobile user device 20 further receives a signal 104 from the wireless access point 10, as shown in 902. The mobile user device 20 measures the strength 103 of the signal 104 transmitted or broadcasted by the wireless access point 10, as shown in 904. It then calculates a power difference 201 between the signal strength 103 and the variable transmission power 102 of the wireless access point 10, as shown in 905. The mobile user device 20 further measures the angle of incidence 105 of the signal 104 of the wireless access point 10 on the mobile user device 20, as shown in 903. Taking this power difference 201 and the angle of incidence 105 into account, the mobile user device 20 calculates a user device distance 500, as shown in 906, which is the distance separating the mobile user device 20 and the wireless access point 10, and it is able to associate the signal 104 to the correct wireless access point 10 and thereby to determine the location of the wireless access point 10.

According to an embodiment shown in Fig. 10, a mobile user device 20 with data connectivity calculates its relative position with respect to a wireless access point 10 and to a neighbouring wireless access point 30. The mobile user device 20 picks up an information packet 100 transmitted or broadcasted by the wireless access point 10, as shown in 910, and picks up an information packet 300 transmitted or broadcasted by the wireless access point 30, as shown in 916. The mobile user device 20 decodes the information packet 100 of the wireless access point 10 and therefore becomes knowledgeable of the variable transmission power 102 of the wireless access point 10, as shown in 910, and decodes the information packet 300 of the neighbouring wireless access point 30 and therefore becomes knowledgeable of the variable transmission power 302 of the wireless access point 30, as shown in 916. The mobile user device 20 further receives a signal 104 from the wireless access point 10, as shown in 911, and a signal 304 from the neighbouring wireless access point 30, as shown in 917. The mobile user device 20 measures the strength 103 of the signal 104 transmitted or broadcasted by the wireless access point 10, as shown in 912, and the strength 303 of the signal 304 transmitted or broadcasted by the neighbouring wireless access point 30, as shown in 918. It then calculates a power difference 201 between the signal strength 103 and the variable transmission power 102 of the wireless access point 10, as shown in 914, and a power difference 301 between the signal strength 303 and the variable transmission power 302 of the neighbouring wireless access point 30, as shown in 920. The mobile user device 20 further measures the angle of incidence 105 of the signal 104 of the wireless access point 10 on the mobile user device 20, as shown in 913, and the angle of incidence 305 of the signal 304 of the neighbouring wireless access point 30 on the mobile user device 20, as shown in 919. Taking this power difference 201 into account, the mobile user device 20 calculates a user device distance 500, as shown in 915, which is the distance separating the mobile user device 20 and the wireless access point 10. Taking this power difference 301 into account, the mobile user device 20 calculates a user device distance 501, as shown in 921, which is the distance separating the mobile user device 20 and the neighbouring wireless access point 30, Taking the angles of incidence 105 and 305 into account during the calculation, the mobile user device 20 is further able to correctly associate the signal 104 to the wireless access point 10, and the signal 304 to the neighbouring wireless access point 30, and thereby is able to determine the location of the wireless access point 10 and of the neighbouring wireless access point 30.

According to an embodiment shown in Fig. 11, a mobile user device 20 with data connectivity calculates its relative position with respect to a wireless access point 10 and to a neighbouring wireless access point 30. The mobile user device 20 picks up an information packet 100 transmitted or broadcasted by the wireless access point 10, as shown in 930. The mobile user device 20 decodes the information packet 100 of the wireless access point 10 and therefore becomes knowledgeable of the variable transmission power 102 of the wireless access point 10, and of the variable transmission power 302 of a neighbouring wireless access point 30, and/of an access point distance 400 separating the wireless access point 10 from the neighbouring wireless access point 30, and/or an angle of incidence 305 of a signal 304 transmitted or broadcasted by the neighbouring wireless access point 30 and measured by the wireless access point 10, as shown in 930. The mobile user device 20 further receives a signal 104 from the wireless access point 10, as shown in 931. The mobile user device 20 measures the strength 103 of the signal 104 transmitted or broadcasted by the wireless access point 10, as shown in 932. It then calculates a power difference 201 between the signal strength 103 and the variable transmission power 102 of the wireless access point 10, as shown in 934. The mobile user device 20 further measures the angle of incidence 105 of the signal 104 of the wireless access point 10 on the mobile user device 20, as shown in 933. Taking this power difference 201 into account, the mobile user device 20 calculates a user device distance 500, as shown in 935, which is the distance separating the mobile user device 20 and the wireless access point 10. Taking the angle of incidence 105 into account during the calculation, the mobile user device 20 is further able to correctly associate the signal 104 to the wireless access point 10, and thereby is able to determine the location of the wireless access point 10. After the calculation of the position of the mobile user device 20 with respect to the wireless access point 10, the mobile user device calculates its position with respect to the neighbouring wireless access point 30 by taking into account the access point distance 400 of the information packet 100.

According to an embodiment shown in Fig. 10, a mobile user device 20 with data connectivity calculates its relative position with respect to a wireless access point 10 and to a neighbouring wireless access point 30. The mobile user device 20 picks up an information packet 100 transmitted or broadcasted by the wireless access point 10, as shown in 950, and picks up an information packet 300 transmitted or broadcasted by the wireless access point 30, as shown in 956. The mobile user device 20 decodes the information packet 100 of the wireless access point 10 and therefore becomes knowledgeable of the variable transmission power 102 of the wireless access point 10, and of the variable transmission power 302 of a neighbouring wireless access point 30, and/of an access point distance 400 separating the wireless access point 10 from the neighbouring wireless access point 30, and/or an angle of incidence 305 of a signal 304 transmitted or broadcasted by the neighbouring wireless access point 30 and measured by the wireless access point 10, as shown in 950. The mobile user device 20 further decodes the information packet 300 of the neighbouring wireless access point 30, as shown in 956. The mobile user device 20 further receives a signal 104 from the wireless access point 10, as shown in 951, and a signal 304 from the neighbouring wireless access point 30, as shown in 957. The mobile user device 20 measures the strength 103 of the signal 104 transmitted or broadcasted by the wireless access point 10, as shown in 952, and the strength 303 of the signal 304 transmitted or broadcasted by the neighbouring wireless access point 30, as shown in 958. It then calculates a power difference 201 between the signal strength 103 and the variable transmission power 102 of the wireless access point 10, as shown in 954, and a power difference 301 between the signal strength 303 and the variable transmission power 302 of the neighbouring wireless access point 30, as shown in 960. The mobile user device 20 further measures the angle of incidence 105 of the signal 104 of the wireless access point 10 on the mobile user device 20, as shown in 953, and the angle of incidence 305 of the signal 304 of the neighbouring wireless access point 30 on the mobile user device 20, as shown in 959. Taking this power difference 201 into account, the mobile user device 20 calculates a user device distance 500, as shown in 955, which is the distance separating the mobile user device 20 and the wireless access point 10. Taking this power difference 301 into account, the mobile user device 20 calculates a user device distance 501, as shown in 961, which is the distance separating the mobile user device 20 and the neighbouring wireless access point 30, Taking the angles of incidence 105 and 305 into account during the calculation, the mobile user device 20 is further able to correctly associate the signal 104 to the wireless access point 10, and the signal 304 to the neighbouring wireless access point 30, and thereby is able to determine the location of the wireless access point 10 and of the neighbouring wireless access point 30. After the calculation of the position of the mobile user device 20 with respect to the wireless access point 10 and to the neighbouring wireless access point 30, the mobile user device can more accurately determine its position by computing the access point distance 400 of the information packet 100, which provides him with the distance separating the wireless access point 10 from the neighbouring wireless access point 30.

Fig. 13 shows a suitable computing system 500 for hosting the system 1, 2, 3, or 4 of Fig. 1 to 4. Computing system 500 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1 Gb Ethernet interfaces that enables computing system 500 to communicate with other devices and/or systems, for example mechanisms for communicating with one or more other computing systems 580. The communication interface 512 of computing system 500 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, .., could be used.

The system 1, 2, 3, 4 can be implemented as programming instructions stored it local memory 504 of the computing system 500 for execution by its processor 502. Alternatively system 1, 2, 3, 4 could be stored on the storage element 508 or be accessible from another computing system 580 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A wireless access point (10) adapted to transmit or broadcast information with a variable transmission power (102),
**CHARACTERIZED IN THAT** said wireless access point (10) comprises:
- an encoding module (11) adapted to encode its variable transmission power (102) into an information packet (100); and
- a transmission module (12) adapted to transmit or broadcast said information packet (100).

2. A wireless access point (10) according to claim 1, wherein said information packet is a beacon frame (101).

3. A wireless access point (10) according to claim 1, wherein said transmission module (12) of said wireless access point (10) is further adapted to transmit said information packet (100) to a neighbouring wireless access point (30).

4. A wireless access point (10) according to claim 3, wherein said wireless access point (10) further comprises:
- a signal strength measuring module (13) adapted to measure a signal strength (303) of a signal (304) received from a neighbouring wireless access point (30); and
- a receiver (14) adapted to receive and decode an information packet (300) similar to said transmission packet (100) transmitted or broadcasted by said neighbouring wireless access point (30).

5. A wireless access point (10) according to claim 4, wherein said wireless access point (10) further comprises a distance calculating module (15) adapted:
- to calculate a power difference (200) between said transmission power (302) of said neighbouring wireless access point (30) and said signal strength (103); and
- to calculate, from said power difference (200), a corresponding access point distance (400) between said wireless access point (10) and said neighbouring wireless access point (30).

6. A wireless access point (10) according to claim 5, wherein said wireless access point (10) further comprises:
- an angle measurement module (16) adapted to measure an angle of incidence (305) of said signal (304) received from said neighbouring wireless access point (30); and
wherein said distance calculating module (15) is further adapted:
- to determine said neighbouring access point (30) from said angle of incidence (305).

7. A wireless access point (10) according to claim 5 or 6, wherein said information packet (100) transmitted or broadcasted by said wireless access point (10) further comprises a transmission power value (302) of a neighbouring wireless access point (30) and/or said access point distance (400) between said wireless access point (10) and said neighbouring wireless access point (30), and/or said angle of incidence (305) of said signal (304) received from said neighbouring wireless access point (30).

8. A wireless access point (10) according to claim 3, wherein said wireless access point forms part of a Wi-Fi data transmission system (1) comprising a plurality of neighbouring wireless access points (30) similar to said wireless access point (10).

9. A transmitter-implemented method for transmission of information with a variable transmission power (102), said method comprising:
- encoding said transmission power (102) into an information packet (100); and
- transmitting or broadcasting said information packet (100).

10. A mobile user device (20) with wireless data connectivity, said user device (20) comprising:
- a receiving module (21) adapted to receive and decode an information packet (100) transmitted or broadcasted by a wireless access point (10) and comprising a transmission power value (102);
- a signal strength measuring module (22) adapted to measure a signal strength (103) of a signal (104) transmitted or broadcasted by said wireless access point (10) and received by said user device (20); and
- a distance calculating module (23) adapted to calculate a power difference (201) between said transmission power value (102) and said signal strength (103), and further adapted to calculate a corresponding user device distance (500) between said user device (20) and said wireless access point (10) using said power difference (201).

11. A mobile user device (20) according to claim 10, wherein said information packet (100) is a beacon frame (101).

12. A mobile user device (20) according to claim 11, wherein said receiving module (21) is further adapted:
- to receive from a plurality of wireless access points (10;30) an information packet (100;300) similar to said information packet (100);
and wherein said signal strength measuring module (22) is further adapted:
- to measure a signal strength (103;303) of a plurality of signals (104;304) transmitted or broadcasted by said plurality of wireless access points (10;30) and received by said user device (20); and
wherein said distance calculating module (23) is further adapted:
- to calculate a power difference (201;202) between said transmission power value (102;302) and said signal strength (103;303) for each wireless access point (10;30), and further adapted to calculate a plurality of corresponding user device distances (500;501) between said user device (20) and each wireless access point (10;30) using said power differences (201;202).

13. A mobile user device (20), according to claim 12, wherein said user device (20) further comprises:
- an angle measuring module (24) adapted to measure an angle of incidence (105) of said signal (104) received from said wireless access point (10); and
wherein said distance calculating module (23) is further adapted:
- to determine said wireless access point (10) from said angle of incidence (105).

14. A mobile user device (20), according to claim 12 or 13, wherein said information packet (100) transmitted or broadcasted by said wireless access point (10) further comprises a transmission power value (302) of a neighbouring wireless access point (30) and/or said access point distance (400) between said wireless access point (10) and said neighbouring wireless access point (30), and/or said angle of incidence (305) of said signal (304) received from said neighbouring wireless access point (30) by said wireless point (10).

15. A user-implemented method for localization of a mobile user device (20) with wireless data connectivity, said method comprising:
- receiving from a wireless access point (10) an information packet (100) comprising a transmission power value (102);
- measuring a signal strength (103) of a signal (104) transmitted or broadcasted by said wireless access point (10) and received by said user device (20);
- calculating a power difference (201) said transmission power value (102) and said signal strength (103); and
- calculating a corresponding user device distance (500) between said user device (20) and said wireless access point (10) using said user power difference (201).
